Europäisches Patentamt

European Patent Office

Office européen des brevets

(11) Publication number: 0 351 024
A2

# EUROPEAN PATENT APPLICATION

(21) Application number: 89201854.0

(22) Date of filing: 13.07.89

(51) Int. Cl.⁴: C08G 63/42 , C09D 167/00

(30) Priority: 14.07.88 NL 8801791

(43) Date of publication of application:
17.01.90 Bulletin 90/03

(84) Designated Contracting States:
AT BE CH DE ES FR GB IT LI NL SE

(71) Applicant: STAMICARBON B.V.
Mijnweg 1
NL-6167 AC Geleen(NL)

(72) Inventor: Hardeman, Gerard
Bellamystraat 24
NL-1053 BM Amsterdam(NL)
Inventor: van Riggelen, Wilhelmus Johannes
P.S.M.
Overcinge 53
NL-7608 AK Almelo(NL)
Inventor: Misev, Tosko Alexander
Rengersdiep 6
NL-8032 NK Zwolle(NL)
Inventor: Reker, Willem
Kennedylaan 59
NL-3844 BB Harderwijk(NL)

(54) Process for the preparation of polyesters.

(57) The invention relates to a process for the preparation of polyesters.

The polyesters are prepared by causing a dicarboxylic acid or dicarboxylic acid derivative and a diol in a molar ratio between 1:1.8 and 1:2.2 to react in an esterification reaction in a first step to form an OH-terminated prepolyester with an $M_n$ of at most 600 and then converting the prepolyester obtained with a dicarboxylic anhydride into a COOH-terminated oligoester in a second step, via a ring opening reaction, after which, in a third step, the oligoester obtained reacts with a monocarboxylic acid glycidyl ester via a ring opening reaction.

# PROCESS FOR THE PREPARATION OF POLYESTERS

The invention relates to a process for the preparation of polyesters based on a dicarboxylic acid, a diol and a monocarboxylic glycidyl ester and the use of these polyesters as binding agents in coating compositions.

Such a process is known from US-A-4045391, which describes a process for the preparation of polyesters with low viscosity (alkyd resins) modified with fatty acid for stoving varnish systems with a low solvent content, in which, in the first step, at elevated temperatures, monocarboxylic acid glycidyl ester is added to polycar boxylic acids or ester polycarboxylic acids, and, in the second step, polycarboxylic acid anhydrides are added to the polyhydric ester alcohols formed, after which, in the third step, epoxy alkanes or epoxy alkanols are added to the ester polycarboxylic acids formed or the ester polycarboxylic acids are mono-esterified with a high excess of polyhydric alcohols and, optionally, polycarboxylic anhydrides are added in the fourth step.

A disadvantage of this process is that to obtain coating compositions with good mechanical properties several cycles of ring opening reactions are required during the polyester preparation. This results in a long synthesis route and, because of the higher molecular weight of the resin that is then obtained, the solids content of the coating composition must be kept low to obtain a good processing viscosity.

The aim of the invention is to provide a process for the preparation of polyesters that results in coating compositions with a high solids content and with excellent mechanical properties.

Preferably, polyesters are understood to be saturated polyesters or alkyd resins.

The process according to the invention for the preparation of polyesters based on a dicarboxylic acid, a diol and a monocarboxylic acid glycidyl ester is characterized in that an OH-terminated prepolyester with a number-average molecular weight $M_n$ of at most 600 is formed in a first step by an esterification reaction of a dicarboxylic acid or dicarboxylic acid derivative and a diol in a molar ratio between 1:1.8 and 1:2.2 after which, in a second step, the prepolyester obtained is converted, via a ring opening reaction, with a dicarboxylic anhydride, to form a COOH-terminated oligoester, after which, in a third step, the oligoester obtained reacts with a monocarboxylic acid glycidyl ester via a ring opening reaction.

According to a preferred embodiment of the invention the molar ratio of the dicarboxylic acid or dicarboxylic acid derivative and diol in the first step is 1:2.

In the second step the molar ratio between the OH-terminated prepolyester and the dicarboxylic anhydride is preferably between 0,9:1,1 and 1,1:0,9.

In the third step the molar ratio between the COOH-terminated oligoester and the monocarboxylic acid glycidyl ester is preferably between 0,9:1,1 and 1,1:0,9.

Most preferably said molar ratios in the second step and in the third step are next to 1:1.

As dicarboxylic acid or dicarboxylic acid derivative in the first step use is preferably made of an aromatic acid, such as isophthalic acid, terephthalic acid and/or a dicarboxylic acid derivative such as the dimethyl ester of terephtalic acid or a cycloaliphatic acid such as 1,4-cyclohexanedicarboxylic acid. Triacids or aliphatic diacids may also be used in minor amounts, of less than 50 wt.%.

As diols use is preferably made in the first step of alcohols with 2-10 carbon atoms, such as ethylene glycol, propylene glycol, 1,4-butanediol, 1,3-butanediol, 1,6-hexanediol, 1,8-octanediol, neopentyl glycol and/or trimethylpentanediol. Optionally, trivalent alcohols may be combined with these bivalent alcohols in amounts of less than 50 wt.%.

The first step is carried out at temperatures between 150°C and 240°C, preferably between 180°C and 220°C. In this step preferably the diester of the corresponding dicarboxylic acid, such as isophthalic acid or terephtalic acid, is formed with two molecules of the diol in the esterification reaction. In addition to the reagents, additives may also be present in this first step, in amounts to at most 1 wt.%, such as catalysts, for example dibutyltin oxide, and colour suppressors, such as triphenyl phosphite.

The dicarboxylic anhydrides in the second step are preferably anhydrides based on carboxylic acids with 4-12 carbon atoms. Examples of such anhydrides are maleic anhydride, succinic anhydride, phthalic anhydride, hexahydroterephtalic anhydride, trimellitic anhydride and/or endomethylene tetrahydrophtalic anhydride.

The COOH-terminated oligoester has a low OH-value, preferably less than 5.

The second step is carried out at temperatures between 110°C and 175°C, preferably between 120°C and 150°C.

According to a preferred embodiment of the invention, a monocarboxylic acid glycidyl ester with at most 30 carbon atoms, more in particular with 7-30 carbon atoms, is used in the third step.

According to another preferred embodiment of the invention a monocarboxylic acid glycidyl ester with a branched alkyl radical with 8-10 carbon atoms is used as monocarboxylic glycidyl ester in the third step. Preferably, Cardura E 10™ (produced by Shell) is used.

According to another preferred embodiment of the invention a glycidyl ester of a fatty acid with an alkyl radical with 16-20 carbon atoms and one or more double bonds is used as monocarboxylic acid glycidyl ester in the third step. Preferably, the fatty acid is tall oil fatty acid.

The third step is carried out at temperatures between 110□C and 175□C, preferably between 120□C and 150□C. A catalyst may also be present during the third step, to at most 1 wt.%.

The polyester obtained has an Mn of between 600 and 2000.

The process according to the invention provides polyesters that result in coating compositions with a high solids content and very good mechanical properties such as gloss, hardness and flexibility. In particular, the combination of hardness and reverse impact is excellent.

Another disadvantage of the process described in US-A-4045391 is the need to distill the excess of ethylene glycol under reduced pressure, which can lead to transesterification reactions, as a result of which the polyester no longer has an unambiguous structure. The process according the invention also provides the solution to this problem.

A further disadvantage of the process according to US-A-4045391 is the insufficient drying of the air-drying binding agents for coating compositions obtained with that process. The alkyd resins prepared according to the process according to the invention provide products with excellent drying behaviour.

Preferably saturated polyesters and alkyd resins with a high solids content are prepared via the process according to the invention. This solids content is mainly dependent on the polymer fraction with a high molecular weight. The process according to the invention results in such a selective polymer buildup that a fraction with a high molecular weight is virtually absent. Fractions with low molecular weights are also absent. Because of the absence of a high-molecular fraction as well as a low-molecular fraction, the binding agent has a narrow molecular weight distribution.

Polyesters with a narrow molecular weight distribution are known from DE-A-2441922. This publication which describes a process in which at least one at least trivalent alcohol, whether or not mixed with at most 50 mole% of one or more bivalent alcohols, is first converted with at most 1 mole, per hydroxyl group of the alcohol, of at least one internal anhydride of a dicarboxylic acid into the corresponding halfester at at most 170□C. In a second step this halfester is converted, whether or not in the presence of a catalyst, with at least one monoepoxy compound in the form of a glycidyl ester or glycidyl ether into the corresponding dicarboxylic diester con taining OH-groups. Then further conversions are effected at at most 170□C using alternately first a) a dicarboxylic anhydride and then b) a monoepoxy compound and, if so desired, also further (a + b) or a) conversions are effected. A disadvantage of this process in which an excess of trivalent alcohol and a different esterification method is used is that several cycles of ring opening reactions must be effected to obtain good mechanical properties. A single cycle results in very hard, brittle coatings. After several cycles, the viscosity of the binding agent becomes such that a lower solids content is necessary to obtain good processability.

US-A-4659778 describes a process for the preparation of polyesters with a narrow molecular weight distribution in which, in a first step, a ring opening reaction takes place in which a diol or a triol and an anhydride or a di- or triacid react with an epoxy compound and the reaction product obtained then reacts with an epoxy compound or an anhydride in a second step. In contrast with the process according to the invention in which an esterification reaction takes place in the first step, a ring opening reaction takes place in the first step according US-A-4659778. Moreover, the branched monocarboxylic acid glycidyl esters preferably used in the third step according to the process according to the invention cannot be used in the process according to US-A-4659778 because the branched side chain leads to a reduced crosslinking density in the polymer network, resulting in inferior properties in terms of hardness, flexibility and durability.

US-A-4113702 describes a process which comprises condensing a polycarboxylic acid or anhydride with a polyalcohol until a resin is formed having an acid number between 10 and 80 and a viscosity between 30000 and 180000 cP; and thereafter adding to the resultant resin a glycidyl ester of a saturated aliphatic carboxylic acid having 10 to 30 carbon atoms and condensing the glycidyl ester with the resin from the first step at a temperature of 110□C to 150□C until the acid number of the resin is between 0 and 1, and the resin has a viscosity number of 1000 to 4000 cP. However, in contrast to the present inven tion, an excess of the glycidyl ester is necessary for the achievement of a good varnish film. An other difference in the fact that the glycidylester in US-A-4113702 is added to a condensate having an OH-value between 120 and 250, whereas in the present invention the glycidylester is added to a COOH-terminated polyester having a low OH-number.

The polyesters according to the invention may be combined with, for example, compounds containing melamine and isocyanate for stoving varnish systems.

3

The polyesters according to the invention may be mixed with the additives usually used to obtain coating compositions. Examples of such additives are pigments, colourants, fillers, thickening agents, flow promoting agents, flatting agents, stabilizers and/or siccatives.

The invention is elucidated with the aid of the following non-restrictive examples.

## Example I

### Preparation of a polyester

2 moles of dimethyl terephthalate, 4 moles of propylene glycol and 0.05 wt.% zinc acetate were heated under a constant flow of nitrogen in a 3-litre reaction flask with a mechanical stirrer and a vigreux distillation column. The reaction started at 165°C and the methanol released was distilled. The maximum reaction temperature of 200°C was maintained for another 30 minutes after the vigreux column had been removed when 90% of the theoretical amount of methanol had been distilled. After cooling to 120°C 2 moles of phthalic anhydride and 2 moles of succinic anhydride were added, after which the temperature was maintained constant at 120°C for 2 hours. Then 0.05 wt.% dibutyltin oxide and 4 moles of monocarboxylic acid glycidyl ester (Cardura E 10$^{TM}$ produced by Shell) were added, the temperature being maintained at a value below 150°C. When the acid number had dropped to below 5, the resin was cooled and diluted with xylene to a solids content of 80%.

## Example II

### Preparation of a polyester

2 moles of isophthalic acid, 4 moles of neopentyl glycol and 0.05 wt.% of dibutyltin oxide were heated under a constant flow of nitrogen in a 3 litre reaction flask with a mechanical stirrer and a vigreux distillation column. The esterification reaction started at 180°C and the water released was distilled. When the theoretical amount of water had been distilled the reaction mixture was cooled to 120°C. Then 4 moles of hexahydrophthalic anhydride were added and the temperature was maintained at 120°C for 2 hours. Subsequently, 0.05 wt% catalyst and 4 moles of monocarboxylic acid glycidyl ester (Cardura E 10$^{TM}$) were added, the temperature being maintained at a value below 150°C. When the acid number had dropped to below 5, the resin was cooled and diluted with xylene to a solids content of 80%.

## Example III

### Preparation of an alkyd resin

2 moles of dimethyl terephthalate, 4 moles of propylene glycol and 0.05 wt.% of zinc acetate were heated under a constant flow of nitrogen in a 3 litre three-necked flask with a mechanical stirrer and a vigreux distillation column. The reaction started at 165°C and the methanol released was distilled. The maximum reaction temperature of 200°C was maintained for another 30 minutes after the vigreux column had been removed when 90% of the theoretical amount of methanol had been distilled. After cooling to 120°C 4 moles of phthalic anhydride were added, after which the temperature was maintained at 120°C for 2 hours. Then 0.05 wt.% catalyst and 4 moles of glycidyl linoleate were added, the temperature being maintained at a value below 150°C. At an acid number of less than 10 the resin was cooled and diluted with xylene to a solids content of 80% and a viscosity (Emila spindle 50-23°C) of 1.8 Pa.s. Drying was measured with a so-called BK drying recorder (Byk-Chemie No. 2710 Mickle Laboratory Engineering Co., Gomshall Surrey, England), the end of the so-called Z stage being reached after 4 hours.

## Comparative Example A

4

### Preparation of a polyester

1 mole of trimethylolpropane and 3 moles of phthalic anhydride were heated to 120°C under a constant flow of nitrogen in a 3 litre reaction flask with a mechanical stirrer and a vigreux distillation column. The reaction mixture was maintained at 120°C for 2 hours, after which 0.05 wt.% dibutyltin oxide and 3 moles of Cardura E 10™ were added, the temperature being maintained below 150°C. After the acid number had dropped to below 5, the resin was cooled and diluted with xylene to a solids content of 80%. The viscosity (Emila spindle 100-20°C) was 6.3 Pa.s.

### Comparative Example B

### Preparation of a polyester

Before being diluted, the product obtained in Comparative Example A was caused to react in a subsequent cycle of ring opening reactions with 3 moles of phthalic anhydride and then with 3 moles of Cardura E 10™. Subsequently, the resin was cooled and diluted with xylene to a solids content of 80%. The viscosity (Emila spindle 100-20°C) was 45 Pa.s.

### Comparative Example C

### Preparation of an alkyd resin

1 mole of trimethylolpropane and 3 moles of phthalic anhydride were heated to 120°C under a constant flow of nitrogen in a 3-litre reaction flask with a mechanical stirrer and a vigreux distillation column. The reaction mixture was maintained at 120°C for three hours, after which 0.05 wt.% catalyst and three moles of glycidyl linoleate were added, the temperature being maintained below 150°C.
When the acid number had dropped to below 10, the resin was cooled and diluted with xylene to a solids content of 80%. Viscosity (Emila spindle 100-23°C) was 2 Pa.s. The measurement of the drying referred to in Example III yielded a result of 6 hours with the alkyd resin obtained in this comparative example.

### Example IV

### Preparation of a coating composition

The polyesters obtained according to Examples I and II were incorporated into the following paint compositions (Paint I and Paint II, respectively):
452.0 parts by weight of polyester according to the invention
386.0 parts by weight of titanium dioxide
120.0 parts by weight of hexamethoxymethyl melamine
4.6 parts by weight of paratoluene sulphonic acid
1.0 parts by weight of flow promoting agent
36.4 parts by weight of xylene
The paints obtained were diluted to a sprayviscosity (28 seconds, DIN cup 4, DIN 53211) with the solvent mixture consisting of butyl glycol, n-butyl acetate and xylene in a weight ratio of 14:48:38. These compositions were then sprayed onto phosphated steel ('Bonder-132 plates') and also onto 1 mm thick degreased steel and stoved at 160°C for 20 minutes.
The mechanical properties obtained of paints with layer thicknesses between 30 and 45 μm were tested after 3 days and the results obtained for phosphated steel and degreased steel were identical:

|  | Paint I | Paint II |
|---|---|---|
| solids content (at a sprayviscosity of 28 sec., DIN cup, 4 mm) | 75 wt.% | 75 wt.% |
| gloss (20¤, DIN 67530) | 77% | 78% |
| hardness (DIN 53157) | 145 sec. | 155 sec. |
| elasticity (DIN 53156) | 8.0 mm | 8.0 mm |
| reverse impact (ASTM D 2794) | 120 inches/lb | 100 inches/lb |
| adhesion (DIN 53151) | GtO* | GtO* |

*GtO : no loss of adhesion and Gt5: no adhesion properties present.

Comparative Example D

The polyesters obtained according to Comparative Example A and Comparative Example B were incorporated into and processed in paint compositions (Paint A and Paint B, respectively) as described in Example IV.

The mechanical properties obtained of these paints with layer thicknesses between 30 and 45 μm were tested after 3 days and the results obtained were as follows:

|  | Paint A | Paint B |
|---|---|---|
| solids content | 75 wt.% | 70 wt.% |
| hardness | 155 sec. | 160 sec. |
| reverse impact | < 10 inches/lb | 30 inches/lb |
| elasticity | 4.2 mm | 7.5 mm |
| adhesion | Gt1-2* | GtO* |

*GtO : no loss of adhesion and Gt5: no adhesion properties present.

This shows that the mechanical properties, in particular the reverse impact, of the resins according to Comparative Examples A and B (prepared according to DE-A-2441922) are insufficient. Moreover, it has been found that several cycles of ring opening reactions lead to an improvement of the mechanical properties (greater reverse impact with Paint B) but that (already in the second cycle) this also results in a reduction in the solids content.

**Claims**

1. Process for the preparation of polyesters based on a dicarboxylic acid, a diol and a monocarboxylic glycidyl ester, characterized in that an OH-terminated prepolyester with a number-average molecular weight Mn of at most 600 is formed in a first step by an esterification reaction of a dicarboxylic acid or dicarboxylic acid derivative and a diol in a molar ratio between 1:1.8 and 1:2.2, after which, in a second step, the prepolyester obtained is converted, via a ring opening reaction, with a dicarboxylic anhydride to form a COOH-terminated oligoester, after which, in a third step, the oligoester obtained reacts with a monocarboxylic acid glycidyl ester via a ring opening reaction.

2. Process according to claim 1, characterized in that the molar ratio of the dicarboxylic acid or dicarboxylic acid derivative and the diol in the first step is 1:2.

3. Process according to claim 1, characterized in that in the second step the molar ratio between the OH-terminated prepolyester and the dicarboxylic anhydride is between 0,9:1,1 and 1,1:0,9.

4. Process according to claim 1, characterized in that in the third step the molar ratio between the COOH-terminated oligoester and the monocarboxylic acid glycidylester is between 0,9:1,1 and 1,1:0,9.

5. Process according to any one of claims 1-4, characterized in that an aromatic acid or a derivative thereof is used as carboxylic acid or dicarboxylic acid derivative in the first step.

6. Process according to any one of claims 1-5, characterized in that the monocarboxylic acid glycidyl ester contains an alkyl radical with at most 30 carbon atoms.

7. Process according to claim 6, characterized in that the monoca, boxylic acid glycidyl ester contains a branched alkyl radical with 8-10 carbon atoms.

8. Process according to claim 6; characterized in that a fatty acid ester containing an alkyl radical with 16-20 carbon atoms and one or more double bonds is used as monocarboxylic acid glycidyl ester.

9. Resin composition based on a polyester obtained with the process according to any one of claims 1-8.

10. Coating composition based on a resin composition according to claim 9.